# FASCICULE DE BREVET EUROPEEN

(11) **EP 0 671 312 B1**
(45) Date de publication et mention de la délivrance du brevet: **15.09.1999**
(21) Numéro de dépôt: 95400495.8
(22) Date de dépôt: 07.03.1995
(51) Int. Cl.: B62D 23/00, B62D 29/00, B62D 27/00

(54) **Structure de véhicule automobile à au moins un noeud de jonction d'éléments allongés, tels que longerons, montants, traverses du véhicule**
Kraftwagenstruktur mit mindestens einer Knotenpunktverbindung für langgestreckte Elemente, wie Rahmenlangsträger, Pfosten, Querträger des Wagens
Motorcar structure with at least one connecting node for elongated members like chassis beams, posts, transverse beams of the car

(30) Priorité: 09.03.1994 FR 9402719
(43) Date de publication de la demande: 13.09.1995
(73) Titulaire: AUTOMOBILES PEUGEOT, 75116 Paris (FR); AUTOMOBILES CITROEN, 92200 Neuilly-sur-Seine (FR)
(72) Inventeur: Langlois, Michel, F-78180 Montigny le Bretonneux (FR)
(74) Mandataire: Thinat, Michel

(56) Documents cités:
- EP-A- 0 461 345
- EP-A- 0 547 346
- EP-B- 0 146 716
- WO-A-94/10022
- DE-A- 4 014 385
- FR-A- 2 645 106
- US-A- 4 826 238

## Description

La présente invention concerne une structure de véhicule automobile à au moins un noeud de jonction d'éléments allongés, notamment en forme de profilés, tels que longerons, montants, traverses du véhicule.

Certains véhicules automobiles, en particulier les petits véhicules urbains, ont une structure sous forme d'un assemblage de profilés en alliage léger. Dans ce genre de véhicule, se pose le problème de liaison des profilés entre eux.

Ainsi, lorsque les profilés se croisent en se superposant, cette liaison est assurée en général par des cordons de soudure ou par des plaquettes percées recevant des tirants filetés enserrant les profilés. Ces types de liaison ne favorisent pas la tenue des différents éléments du véhicule lors de son roulement, notamment lorsque ceux-ci subissent des efforts mécaniques importants.

Par ailleurs, l'apport de fonctions supplémentaires a ces liaisons de profilés, telles que par exemple l'accrochage du moteur du véhicule ou d'une suspension de celui-ci, ne peut être effectué qu'en y soudant des supports ou d'autres profilés appropriés, ou en adoptant une solution par croisement et superposition ou rivetage.

Le document EP-B-0146716 décrit une structure de véhicule automobile comprenant les caractéristiques énoncées dans le préambule de la revendication 1.

Cependant, les noeuds de jonction de cette structure connue ne sont pas du tout adaptés a servir de fixation d'un élément mécanique lourd du véhicule, tel que par exemple un bras de suspension de roues du véhicule ou un plancher de celui-ci.

La présente invention a pour but d'éliminer les inconvénients ci-dessus exposés en proposant une structure de véhicule automobile comprenant les caractéristiques énoncées dans la partie caractérisante de la revendication 1.

Le noeud est en métal léger tel que l'aluminium ou un alliage d'aluminium.

L'élément mécanique fixé au noeud est un bras de suspension, notamment du type a bras tiré relié à la caisse du véhicule à sa partie antérieure par deux articulations.

Le noeud comprend une partie en forme de chape sur laquelle est montée l'une des deux articulations du bras précité.

L'articulation est une articulation élastique d'axe sensiblement vertical.

Le noeud comprend au moins une embase en forme d'amorce de tube sur laquelle est fixée une extrémité de section correspondante d'un élément allongé en forme de profilé.

L'embase du noeud ou l'extrémité de l'élément allongé en forme de profilé comprend un épaulement sur lequel est emboîtée respectivement l'extrémité de l'élément allongé en forme de profilé ou une embase du noeud, la fixation entre l'élément allongé et l'embase étant effectuée de préférence par soudure.

Le noeud comprend avantageusement une nervure servant a supporter une partie de forme correspondante du plancher du véhicule.

La nervure comprend une première partie verticale se raccordant à une deuxième partie horizontale ou inclinée.

Le noeud comprend également une nervure venant en alignement avec une nervure de forme correspondante prévue sur l'un des éléments allongés en forme de profilé et destinée à recevoir un élément tel qu'un joint.

Dans une application particulière, le noeud se trouve au niveau de l'anneau arrière du véhicule sur lequel s'appuie un volet arrière de celui-ci et l'une au moins des articulations de ce volet est fixée sur le noeud.

Dans le cas où le volet arrière du véhicule est muni d'au moins un vérin stabilisateur, l'extrémité de ce vérin solidaire de la caisse du véhicule est fixée sur le noeud.

Dans une autre application, l'embase du noeud est fixée à un montant constituant le pied milieu du véhicule et le noeud comprend de plus une embase latérale à laquelle est fixé un longeron du véhicule et, le cas échéant, une troisième embase à laquelle est fixée une traverse du véhicule.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels.
La figure 1 représente partiellement en perspective une structure de véhicule automobile à noeuds de jonction selon l'invention.
La figure 2 est une vue agrandie en perspective d'un noeud suivant la flèche II de la figure 1.
La figure 3 est une vue agrandie en perspective suivant la flèche III de la figure 1.
La figure 4 est une vue de face suivant la flèche IV de la figure 1.
La figure 5 est une vue de dessus suivant la flèche V de la figure 4.
La figure 6 est une vue de côté suivant la flèche VI de la figure 4.
La figure 7 est une demi-vue en coupe partielle suivant la ligne VII-VII de la figure 3.
La figure 8 est une vue partielle agrandie d'un second noeud suivant la flèche VIII de la figure 1.
La figure 9 est une vue partielle agrandie d'un troisième noeud suivant la flèche IX de la figure 1.

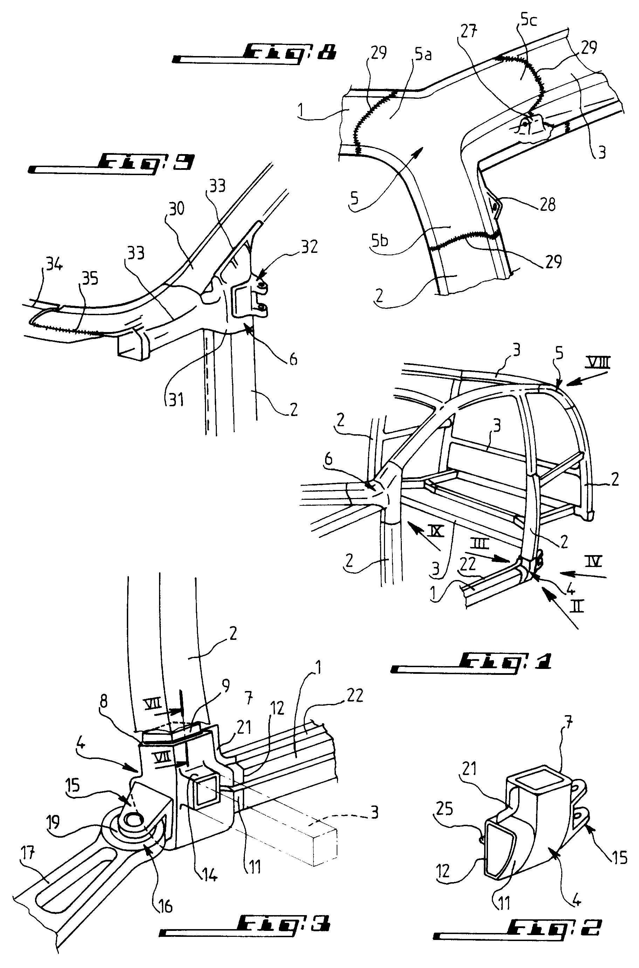

La figure 1 représente une structure de véhicule automobile du genre véhicule urbain à une seule porte latérale et constituée d'un certain nombre d'éléments allongés, notamment en forme de profilés, tels que longerons 1, montants 2 et traverses 3, dont certains sont liés entre eux par des noeuds de jonction portant les références 4, 5 et 6.

Le noeud de jonction 4 sert à la fixation d'un montant 2 appelé pied milieu et d'un longeron 1 délimitant en partie avec le montant 2 l'encadrement de la porte latérale du véhicule.

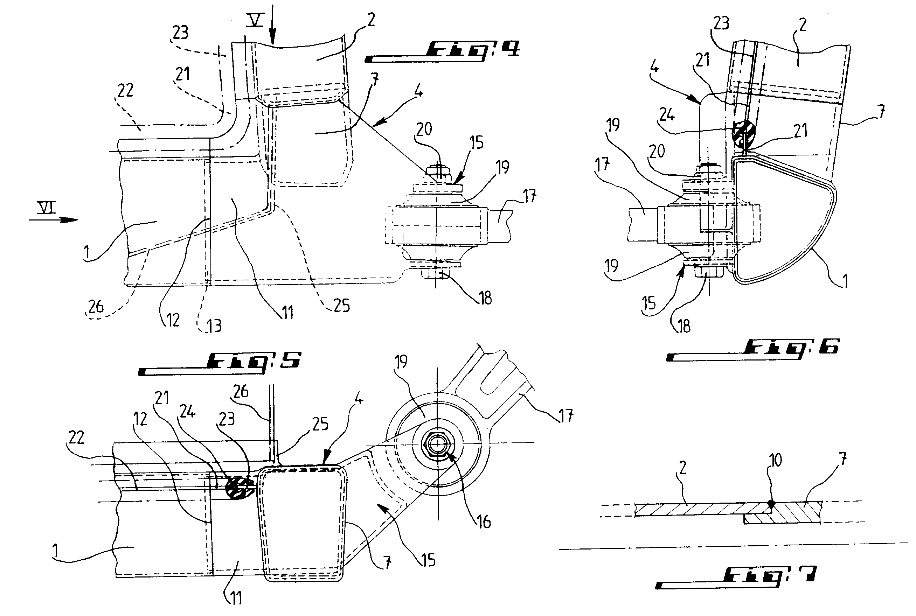

Comme représenté aux figures 2 à 7, le noeud 4 qui est réalisé en une seule pièce, de préférence par fonderie, en métal léger tel que l'aluminium ou un alliage d'aluminium, comprend une embase supérieure 7 en forme d'amorce de tube sur laquelle est fixée une extrémité de section correspondante, dans le cas présent sensiblement carrée, du montant 2. A cet effet, l'embase supérieure 7 comprend un épaulement 8 définissant une portée 9 de courte longueur sur laquelle est emboîtée l'extrémité inférieure du montant 2 venant en appui sur l'épaulement 8. La fixation du montant 2 à l'embase supérieure 7 est de préférence effectuée par un cordon de soudure périphérique 10 (figure 7). Bien entendu, la liaison entre le montant 2 et l'embase supérieure 7 peut être effectuée en prévoyant un épaulement à l'extrémité du montant 2 et emboîtant l'extrémité inférieure de ce montant dans l'embase supérieure 7.

Le noeud 4 comprend de plus une embase latérale 11 également en forme d'amorce de tube et dont l'axe est sensiblement perpendiculaire à celui de l'embase supérieure 7. Sur cette embase 11 est fixé le longeron 1 de la même manière que le montant 2 est fixé à l'embase 7. Ainsi, l'embase 11 peut comporter un épaulement 12 définissant une portée de courte longueur 13 sur laquelle s'emboîte l'extrémité du longeron 1 venant en appui sur l'épaulement 12.

Le cas échéant, le noeud 4 peut comporter une embase 14 en forme d'amorce de tube à axe longitudinal sensiblement perpendiculaire à celui de l'embase 11 et disposée à l'intérieur de la structure du véhicule de façon à recevoir une traverse 3 fixée à l'embase 14 de la même manière que le montant 2 est fixé à l'embase supérieure 7.

Le noeud de jonction 4 comprend également une partie en forme de chape 15 située en arrière du noeud en considérant la figure 1 et sur laquelle est montée l'une 16 des deux articulations d'un bras de suspension 17 du type à bras tiré, relié à la caisse du véhicule à sa partie antérieure par ces deux articulations. Le bras 17 est fixé à la partie en forme de chape 15 par une vis 18 traversant un bloc élastique 19 disposé dans la partie en forme de chape 5 et un écrou 20. Le bras de suspension 17 est ainsi fixé à la partie formant chape 15 par une articulation élastique à axe sensiblement vertical.

Le noeud de jonction 4 comprend également une nervure extérieure 21 approximativement en équerre disposée dans un plan vertical entre l'embase supérieure 7 et l'embase latérale 11 et dont la partie s'étendant horizontalement vient en alignement avec une nervure de forme correspondante 22 prévue sur le longeron 1 et la partie s'étendant verticalement vient en alignement avec une nervure de forme correspondante 23 prévue sur le montant 2. Les nervures 21, 22 et 23 sont destinées à recevoir un joint d'étanchéité de porte 24.

Le noeud 4 comprend une autre nervure extérieure 25 comprenant, comme cela ressort clairement de la figure 4, une première partie verticale prolongée par une deuxième partie inclinée de façon à supporter une forme correspondante du plancher 26 du véhicule. Au lieu d'être inclinée, la deuxième partie de la nervure 25 peut être horizontale.

Le noeud 5 tel que représenté en figure 8 se trouve au niveau de l'anneau arrière du véhicule et sur lequel s'appuie un volet arrière (non représenté) du véhicule. L'une 27 des articulations du volet arrière est fixée sur le noeud 5. La figure 8 montre également qu'une articulation 28 de l'extrémité d'un vérin stabilisateur, également non représenté, du volet arrière est fixée sur le noeud 5, dont les embases 5a, 5b, 5c sont fixées, de préférence par des cordons de soudure 29, respectivement au longeron 1, au montant 2 et à la traverse 3 de l'anneau arrière du véhicule de la même manière que les montant 2 et longeron 1 associés au noeud de jonction 4.

La figure 9 représente le noeud 6 servant de jonction entre le montant avant gauche 2 d'encadrement de la porte latérale du véhicule et la partie formant arc de pavillon 30 du véhicule. Le noeud 6 comprend ainsi une embase inférieure 31 fixée à l'extrémité supérieure du montant 2 et une partie formant chape 32 servant d'articulation supérieure de la porte latérale du véhicule. Cette figure montre que l'arc de pavillon est fixé sur le noeud 6 par des cordons de soudure 33 et la référence 34 désigne une baie de pare-brise solidarisée à l'arc de pavillon 30 par un cordon de soudure 35.

Le noeud de jonction conforme à l'invention permet ainsi d'assurer à la fois la fonction de liaison de montants, de longerons et/ou de traverses de véhicule automobile et d'éléments mécaniques ou de carrosserie du véhicule. Un tel noeud permet d'assembler facilement ces différents éléments de structure du véhicule tout en étant aisément intégrés au sein de cette structure.

Enfin, ce noeud procure une grande tenue aux efforts mécaniques résultant du roulement du véhicule.

## Revendications

1. Structure de véhicule automobile comprenant au moins un noeud de jonction (4 ; 5 ; 6) sur lequel sont fixées les extrémités d'éléments allongés (1, 2, 3), notamment en forme de profilés, tels que longerons, montants, traverses, le noeud (4 ; 5 ; 6) servant à la fixation d'au moins un élément mécanique ou de carrosserie du véhicule, cet élément pouvant être fixe ou mobile par rapport à la structure, caractérisée en ce que le noeud est réalisé d'une seule pièce par fonderie et en ce que le noeud de jonction (4 ; 5 ; 6) sert également à la fixation d'au moins un élément mécanique lourd, tel qu'un bras de suspension de roues du véhicule, une porte ou un volet arrière du véhicule et le plancher de celui-ci.

2. Structure selon la revendication 1, caractérisée en ce que le noeud précité est en un métal léger tel que l'aluminium ou un alliage d'aluminium.

3. Structure selon la revendication 1 ou 2, caractérisée en ce que l'élément mécanique (17) fixé au noeud (4) est un bras de suspension.

4. Structure selon la revendication 3, caractérisée en ce que le bras précité est un bras tiré (17) relié à la caisse du véhicule à sa partie antérieure par deux articulations.

5. Structure selon la revendication 4, caractérisée en ce que le noeud (4) comprend une partie en forme de chape (15) sur laquelle est montée l'une (16) des deux articulations du bras (17) précité.

6. Structure selon la revendication 5, caractérisée en ce que l'articulation (16) est une articulation élastique d'axe sensiblement vertical.

7. Structure selon l'une des revendications précédentes, caractérisée en ce que le noeud (4) comprend au moins une embase (7 ; 11 ; 14) en forme d'amorce de tube sur laquelle est fixée une extrémité de section correspondante d'un élément allongé en forme de profilé (2 ; 1 ; 3).

8. Structure selon la revendication 7, caractérisée en ce que l'embase précitée du noeud (4) ou l'extrémité de l'élément allongé en forme de profilé précité comprend un épaulement (8 ; 12) sur lequel est emboîtée respectivement l'extrémité de l'élément allongé en forme de profilé ou l'embase du noeud (4), la fixation entre l'élément allongé et l'embase étant effectuée de préférence par soudure.

9. Structure selon l'une des revendications précédentes, caractérisée en ce que le noeud (4) comprend une nervure (25) servant à supporter une partie de forme correspondante du plancher (26) du véhicule.

10. Structure selon la revendication 9, caractérisée en ce que la nervure (25) comprend une première partie verticale se raccordant à une deuxième partie horizontale ou inclinée.

11. Structure selon l'une des revendications précédentes, caractérisée en ce que le noeud (4) comprend une nervure (21) venant en alignement avec une nervure de forme correspondante (22 ; 23) prévue sur l'un (1 ; 2) des éléments allongés en forme de profilé et destinée à recevoir un élément tel qu'un joint (24).

12. Structure selon la revendication 1 ou 2, caractérisée en ce que le noeud (5) se trouve au niveau de l'anneau arrière du véhicule sur lequel s'appuie un volet arrière de celui-ci et l'une au moins des articulations (27) du volet est fixée sur le noeud (5).

13. Structure selon la revendication 12, où le volet arrière du véhicule est muni d'au moins un vérin stabilisateur, caractérisée en ce que l'extrémité de ce vérin stabilisateur, solidaire de la caisse du véhicule, est fixée sur le noeud (5).

14. Structure selon la revendication 1 ou 2, caractérisée en ce que le noeud (6) se trouve au niveau de la partie avant formant arc de pavillon (30) du véhicule et sert notamment à la fixation d'une des articulations de la porte avant du véhicule.

## Claims

1. Structure of automotive vehicle comprising at least one junction node (4; 5; 6) onto which are fastened the ends of elongated elements (1, 2, 3) in particular in the shape of sectional members such as longitudinal members, posts, cross members, the node (4; 5: 6) serving for the fastening of at least one mechanical or body element of the vehicle, which element may be stationary or movable with respect to the structure, characterized in that the node is made in one single piece by casting and in that the junction node (4; 5; 6) also serves for the fastening of at least one heavy mechanical element, such as a wheel suspension arm of the vehicle, a door or a hatchback of the vehicle and the floor of the latter.

2. Structure according to claim 1, characterized in that the aforesaid node is made from light metal such as aluminium or an aluminium alloy.

3. Structure according to claim 1 or 2, characterized in that the mechanical element (17) fastened to the node (4) is a suspension arm.

4. Structure according to claim 3, characterized in that the aforesaid arm is a drag arm (17) connected to the body of the vehicle at its forward portion by two pivotal connections.

5. Structure according to claim 4, characterized in that the node (4) comprises a yoke-shaped portion (15) onto which is mounted one (16) of both pivotal connections of the aforesaid arm (17).

6. Structure according to claim 5, characterized in that the pivotal connection (16) is an elastic pivotal connection with a substantially vertical axis.

7. Structure according to one of the foregoing claims, characterized in that the node (4) comprises at least one base (7; 11; 14) in the shape of a stub tube onto which is fastened a corresponding section end of an elongated element in the shape of a sectional member (2; 1; 3).

8. Structure according to claim 7, characterized in that the aforesaid base of the node (4) or the end of the aforesaid elongated element in the shape of a sectional member comprises a shoulder (8; 12) onto which is respectively fitted the end of the elongated element in the shape of a sectional member or the base of the node (4), the fastening between the elongated element and the base being preferably carried out by welding.

9. Structure according to one of the foregoing claims, characterized in that the node (4) comprises a rib (25) serving to support a portion of corresponding shape of the floor (26) of the vehicle.

10. Structure according to claim 9, characterized in that the rib (25) comprises a first vertical portion joined to a second horizontal or inclined portion.

11. Structure according to one of the foregoing claims, characterized in that the node (4) comprises a rib (21) caused to be aligned with a rib (22; 23) of corresponding shape provided onto one (1; 2) of the elongated elements in the shape of a sectional member and intended to receive an element such as a sealing joint (24).

12. Structure according to claim 1 or 2, characterized in that the node (5) is located at the level of the rear ring of the vehicle onto which is bearing a hatchback of the latter and at least one of the pivotal connections (27) of the hatchback is fastened onto the node (5).

13. Structure according to claim 12, wherein the hatchback of the vehicle is provided with at least one stabilizing jack, characterized in that the end of this stabilizing jack, made fast to the body of the vehicle, is fastened onto the node (5).

14. Structure according to claim 1 or 2, characterized in that the node (6) is lying at the level of the front portion forming a roof bow (30) of the vehicle and serving in particular for the fastening of one of the pivotal connections of the front door of the vehicle.

## Patentansprüche

1. Kraftfahrzeugaufbau mit wenigstens einem Verbindungsknotenpunkt (4; 5; 6) an welchem die Enden von länglichen Elementen (1, 2, 3), insbesondere in der Gestalt von Profilen, wie Längsträgern, Pfosten, Querträgern befestigt sind, wobei der Knotenpunkt (4; 5; 6) zur Befestigung von wenigstens einem mechanischen oder Kastenelement des Fahrzeuges dient, wobei dieses Element in bezug auf den Aufbau ortsfest oder bewegbar sein kann, dadurch gekennzeichnet, daß der Knotenpunkt einstückig durch Gießerei hergestellt wird und daß der Verbindungsknotenpunkt (4; 5; 6) ebenfalls zur Befestigung wenigstens eines schweren mechanischen Elementes, wie eines Radaufhängungsarmes des Fahrzeuges, einer Tür oder einer Rückwandtür des Fahrzeuges und des Fußbodens desselben dient.

2. Aufbau gemäß Anspruch 1, dadurch gekennzeichnet, daß der vorgenannte Knotenpunkt aus Leichtmetall, wie Aluminium oder einer Aluminiumlegierung ist.

3. Aufbau gemäß Anspruch 1 oder 2, dadurch gekennzeichnet, daß das an dem Knotenpunkt (4) befestigte mechanische Element (17) ein Aufhängungsarm ist.

4. Aufbau gemäß Anspruch 3, dadurch gekennzeichnet, daß der vorgenannte Arm ein mit seinem Vorderteil durch zwei Gelenke mit dem Kasten des Fahrzeuges verbundener gezogener Arm (17) ist.

5. Aufbau gemäß Anspruch 4, dadurch gekennzeichnet, daß der Knotenpunkt (4) einen gabelbügelförmigen Teil (15), an welchem das eine (16) der beiden Gelenke des vorgenannten Armes (17) angeordnet ist, umfaßt.

6. Aufbau gemäß Anspruch 5, dadurch gekennzeichnet, daß das Gelenk (16) ein elastisches Gelenk mit etwa senkrechter Achse ist.

7. Gelenk gemäß einem der vorangehenden Ansprüche, dadurch gekennzeichnet, daß der Knotenpunkt (4) wenigstens einen rohrstummelförmigen Ansatz (7; 11; 14), an welchem ein Ende mit entsprechendem Querschnitt eines profilförmigen länglichen Elementes (2; 1; 3) befestigt ist, umfaßt.

8. Aufbau gemäß Anspruch 7, dadurch gekennzeichnet, daß der vorgenannte Ansatz des Knotenpunktes (4) oder des Endes des vorgenannten profilförmigen länglichen Elementes eine Schulter (8 ; 12), auf welcher jeweils das Ende des profilförmigen länglichen Elementes oder der Ansatz des Knotenpunktes (4) aufgesteckt ist, umfaßt, wobei die Befestigung zwischen dem länglichen Element und dem Ansatz vorzugsweise durch Schweißen durchgeführt wird.

9. Aufbau gemäß einem der vorangehenden Ansprüche, dadurch gekennzeichnet, daß der Knotenpunkt (4) eine zum Tragen eines Abschnitts entsprechender Gestalt des Fußbodens (26) des Fahrzeuges dienende Rippe (25) aufweist.

10. Aufbau gemäß Anspruch 9, dadurch gekennzeichnet, daß die Rippe (25) einen sich an einen zweiten waagerechten oder geneigten Teil anschließenden ersten lotrechten Teil umfaßt.

11. Aufbau gemäß einem der vorangehenden Ansprüche, dadurch gekennzeichnet, daß der Knotenpunkt (4) eine zur fluchtenden Ausrichtung mit einer an einem (1; 2) der profilförmigen länglichen Elemente vorgesehenen Rippe (22; 23) entsprechender Gestalt kommenden Rippe (21), die bestimmt ist ein Element wie eine Dichtung (24) aufzunehmen, umfaßt.

12. Aufbau gemäß Anspruch 1 oder 2, dadurch gekennzeichnet, daß der Knotenpunkt (5) sich in der Höhe des hinteren Ringes des Fahrzeuges, an welchem sich eine Rückwandtür desselben abstützt, befindet und wenigstens das eine der Gelenke (27) der Rückwandtür an dem Knotenpunkt (5) befestigt ist.

13. Aufbau gemäß Anspruch 12, bei welchem die Rückwandtür des Fahrzeuges mit wenigstens einem stabilisierenden Kraftzylinder versehen ist, dadurch gekennzeichnet, daß das mit dem Kasten des Fahrzeuges verbundene Ende des stabilisierenden Kraftzylinders an dem Knotenpunkt (5) befestigt ist.

14. Aufbau gemäß Anspruch 1 oder 2, dadurch gekennzeichnet, daß der Knotenpunkt (6) sich in der Höhe des einen Dachbogen (30) des Fahrzeuges bildenden Vorderteiles befindet und insbesondere zur Befestigung eines der Gelenke der Vordertür des Fahrzeuges dient.
